# EUROPEAN PATENT APPLICATION

(11) **EP 2 822 326 A1**
(43) Date of publication of application: **07.01.2015**
(21) Application number: 12870049.9
(22) Date of filing: 11.05.2012
(51) Int. Cl.: H04W 48/08

(54) **METHOD, SYSTEM AND TERMINAL FOR IMPLEMENTING WI-FI CONNECTION THROUGH NFC**

(30) Priority: 02.03.2012 CN 201210054885
(71) Applicant: ZTE Corporation, Shenzhen, Guangdong 518057 (CN)
(72) Inventor: DAI, Linqing, Shenzhen Guangdong 518057 (CN)
(74) Representative: Brevalex
(86) International application number: PCT/CN2012/075404
(87) International publication number: WO 2013/127124

(57) **Abstract**

A method for implementing a Wi-Fi connection through NFC is disclosed, and the method includes: a Wi-Fi hotspot is scanned by a Wi-Fi hotspot owner terminal, information of a scanned Wi-Fi hotspot is edited and Wi-Fi hotspot information is written into an NFC tag; the Wi-Fi hotspot information in the NFC tag is read and analyzed by a Wi-Fi hotspot user terminal, all available Wi-Fi hotspots are scanned, and a Wi-Fi hotspot matching with analyzed Wi-Fi hotspot information is found and connected. The present disclosure also discloses a system and a terminal for implementing a Wi-Fi connection through NFC. By using the method, system and terminal of the present disclosure, a user doesn't need to input a password when connecting to a Wi-Fi, thereby improving user experiences.

## Description

### TECHNICAL FIELD

The present disclosure relates to the technical field of mobile communication, and in particular to a Wi-Fi connection method, system and terminal through Near Field Communication (NFC).

### BACKGROUD

At present, with the popularity of Wi-Fi techniques, there are free Wi-Fi hotspots available in many public places such as an airport, a coffee shop, a hotel and the like. Since Wi-Fi can restrict a user's connection only through distance and password, in order to prevent users beyond a specific location from connecting to a Wi-Fi and avoid stealing connections by other users, an owner of a Wi-Fi hotspot changes frequently the connection password, for example using a dynamic password; in certain locations, a user is required to input his/her mobile number so that a dynamic password can be sent to the user through a text message, and once the user is beyond a connection scope, he/she needs to re-input the mobile number, thereby making troubles in use.

It can be seen from above that when an existing terminal identifies an available network, no matter the available network is a new network or a previously-accessed network, for a wireless connection between the terminal and the network, general information of the network needs to be loaded into the terminal and a user needs to perform corresponding interactive operations. It is thus clear that the existing method for implementing a Wi-Fi connection is tedious and time-consuming, thus the user experiences are poor.

NFC is a contactless RF identification and interconnection technique, and it provides a convenient communication manner for all consumer electronics. NFC has advantages such as low cost, ease to use and more intuitive, thus it has more potential in certain fields. NFC implements communications between various devices within a distance of several centimeters through a combination of a chip, an antenna and some softwares with a low cost usually being only two or three Euros. After the popularity of NFC, a wireless connection between devices can be implemented only through a combination of a tag and a simple software module, and no user interactions are needed.

### SUMMARY

In view of the above, the present disclosure is intended to provide a Wi-Fi connection method, system and terminal through NFC so that a user doesn't need to input a password when connecting to a Wi-Fi, thereby improving user experiences.

To this end, the technical solutions of the present disclosure are implemented as follows.

The present disclosure provides a method for implementing a Wi-Fi connection through NFC, and the method includes:
a Wi-Fi hotspot is scanned by a Wi-Fi hotspot owner terminal, information of a the scanned Wi-Fi hotspot is edited and Wi-Fi hotspot information is written into an NFC tag; the Wi-Fi hotspot information in the NFC tag is read and analyzed by a Wi-Fi hotspot user terminal, all available Wi-Fi hotspots are scanned, and a Wi-Fi hotspot matching with the analyzed Wi-Fi hotspot information is found and connected.

In an embodiment, before the Wi-Fi hotspot is scanned by the Wi-Fi hotspot owner terminal, the method further includes: a NFC function and a Wi-Fi function of the terminal are enabled.

In an embodiment, when the information of the scanned Wi-Fi hotspot is edited, the Wi-Fi hotspot information is expressed in a format of wifi://Service Set Identifier (SSID)/security/password, and it is packed into an NFC Data Exchange Format (NDEF) record of a Uniform Resource Identifier (URI) type.

In an embodiment, before the Wi-Fi hotspot information in the NFC tag is read by the Wi-Fi hotspot user terminal, the method further includes: a NFC function of the terminal is enabled and the NFC tag is scanned.

In an embodiment, the analyzed Wi-Fi hotspot information includes SSID, security and password.

The present disclosure further provides a system for implementing a Wi-Fi connection through Near Field Communication (NFC), and the system includes an NFC tag, a Wi-Fi hotspot owner terminal and a Wi-Fi hotspot user terminal, wherein
the Wi-Fi hotspot owner terminal is configured to scan a Wi-Fi hotspot, edit information of the scanned Wi-Fi hotspot and write Wi-Fi hotspot information into the NFC tag;
the NFC tag is configured to store the Wi-Fi hotspot information; and
the Wi-Fi hotspot user terminal is configured to read and analyze the Wi-Fi hotspot information in the NFC tag, scan all available Wi-Fi hotspots, and find and connect to a Wi-Fi hotspot matching with the analyzed Wi-Fi hotspot information.

The present disclosure further provides a terminal configured to scan a Wi-Fi hotspot, edit information of the scanned Wi-Fi hotspot and write Wi-Fi hotspot information into an NFC tag.

The present disclosure further provides a terminal configured to read and analyze Wi-Fi hotspot information in an NFC tag, scan all available Wi-Fi hotspots, and find and connect to a Wi-Fi hotspot matching with the analyzed Wi-Fi hotspot information.

The present disclosure further provides an NFC tag configured to store Wi-Fi hotspot information.

In the method, system and terminal for implementing a Wi-Fi connection through NFC according to the present disclosure, a Wi-Fi hotspot is scanned by a Wi-Fi hotspot owner terminal, information of the scanned Wi-Fi hotspot is edited and Wi-Fi hotspot information is written into an NFC tag; the Wi-Fi hotspot information in the NFC tag is read and analyzed by a Wi-Fi hotspot user terminal, all available Wi-Fi hotspots are scanned, and a Wi-Fi hotspot matching with the analyzed Wi-Fi hotspot information is found and connected. It is thus clear that when a Wi-Fi is connected according to the present disclosure, a user doesn't need to input a password, and all operations associated with the connection are implemented independently by a terminal, thereby improving user experiences.

In addition, since NFC has advantages such as low cost, ease to use and more intuitive, the method according to the present disclosure is simple and inexpensive.

### BRIEF DESCRIPTION OF THE DRAWINGS

Fig. 1 is a flow chart of a Wi-Fi connection method through NFC according to the present disclosure;
Fig. 2 is a flow chart of writing Wi-Fi hotspot information into an NFC tag according to an embodiment of the present disclosure;
Fig. 3 is a flow chart of performing Wi-Fi connection through Wi-Fi hotspot information in an NFC tag according to an embodiment of the present disclosure; and
Fig. 4 is a schematic structural diagram of a Wi-Fi connection system through NFC according to the present disclosure.

### DETAILED DESCRIPTION

In the present disclosure, a Wi-Fi hotspot is scanned by a Wi-Fi hotspot owner terminal, information of the scanned Wi-Fi hotspot is edited and Wi-Fi hotspot information is written into an NFC tag;
the Wi-Fi hotspot information in the NFC tag is read and analyzed by a Wi-Fi hotspot user terminal, all available Wi-Fi hotspots are scanned, and a Wi-Fi hotspot matching with the analyzed Wi-Fi hotspot information is found and connected.

The present disclosure will be further elaborated below in combination with accompanying drawings and specific embodiments.

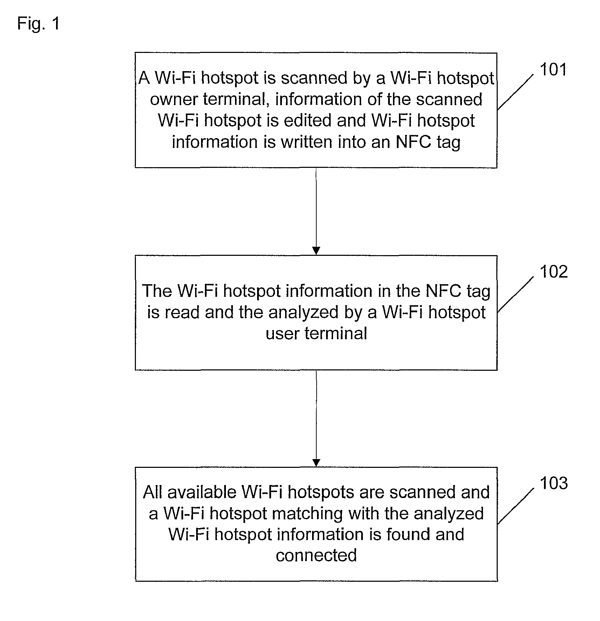

Fig. 1 is a flow chart of a Wi-Fi connection method through NFC according to the present disclosure. As shown in Fig. 1, steps to implement the flow are as follows.

Step 101, a Wi-Fi hotspot is scanned by a Wi-Fi hotspot owner terminal, information of the scanned Wi-Fi hotspot is edited and Wi-Fi hotspot information is written into an NFC tag;

Step 102, the Wi-Fi hotspot information in the NFC tag is read and analyzed by a Wi-Fi hotspot user terminal; and

Step 103, all available Wi-Fi hotspots are scanned and a Wi-Fi hotspot matching with the analyzed Wi-Fi hotspot information is found and connected.

The method according to the present disclosure will be elaborated below with reference to specific embodiments.

The process of the method according to the present disclosure can be divided into portions: a process of writing Wi-Fi hotspot information into an NFC tag by a Wi-Fi hotspot owner and a process of performing Wi-Fi connection by a user through information in the NFC tag. The two portions will be described below respectively.

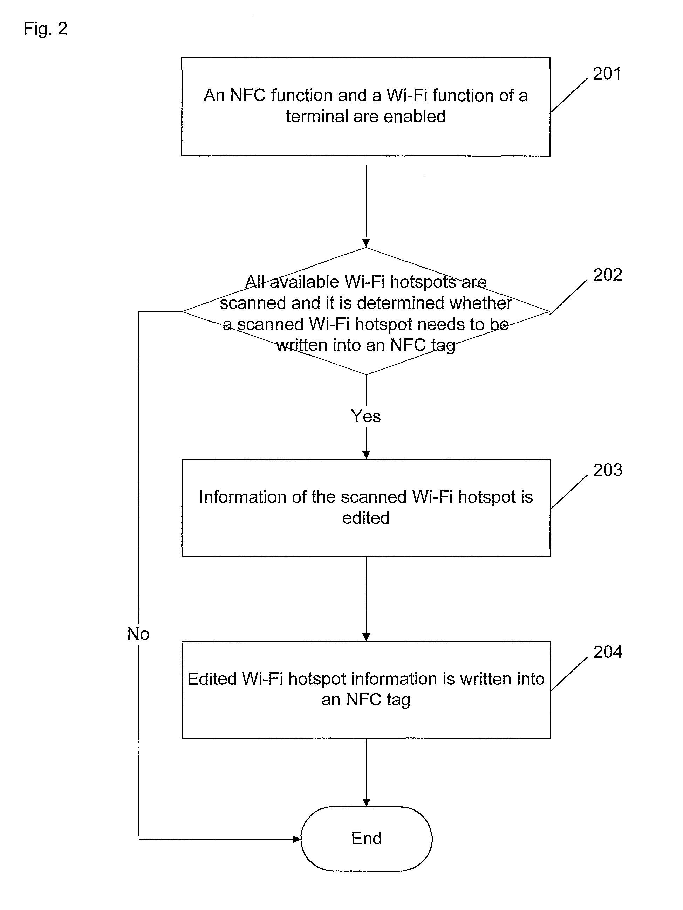

Operations implemented by a Wi-Fi hotspot owner terminal will be described first, as shown in Fig. 2, the steps are as follows.

Step 201: An NFC function and a Wi-Fi function of a terminal are enabled;
here the Wi-Fi hotspot owner terminal needs to be configured with an NFC function and a WLAN function, a Wi-Fi hotspot owner enables the NFC function and the Wi-Fi function of the terminal, and the NFC function is implemented by an NFC module arranged in the terminal.

Step 202, all available Wi-Fi hotspots are scanned and it is determined whether a scanned Wi-Fi hotspot needs to be written into an NFC tag, if Yes, proceed to step 203; otherwise, end the process;
specifically, the terminal scans all available Wi-Fi hotspots and it is determined whether a scanned Wi-Fi hotspot needs to be written into an NFC tag, that is to say, the Wi-Fi hotspot owner determines whether a Wi-Fi hotspot scanned by the terminal needs to be provided for use by a user, if Yes, proceed to step 203, otherwise end the current process.

The process of scanning Wi-Fi hotspots belongs to the prior art, and detailed description thereof will be omitted.

Step 203, information of the scanned Wi-Fi hotspot is edited;
specifically, if a Wi-Fi hotspot owner desires that Wi-Fi hotspot information is encrypted, a password can be input in a Wi-Fi editing interface of an terminal, in this way, the Wi-Fi hotspot information can be expressed in a format of "wifi: //Service Set Identifier (SSID)/security/password", for example, wifi: //TP-LINK/Wired Equivalent Privacy (WEP)/12345678. Then, the Wi-Fi hotspot information is packed into an NFC Data Exchange Format (NDEF) record of a Uniform Resource Identifier (URI) type.

Step 204, the edited Wi-Fi hotspot information is written into an NFC tag;
specifically, after the Wi-Fi hotspot information s packed, a write function of an NFC tag of the terminal is enabled, i.e., the NFC tag is approached to the terminal, if the terminal detects the NFC tag, it writes packed Wi-Fi hotspot information into the NFC tag; certainly, if the NFC tag is not detected, end the current process.

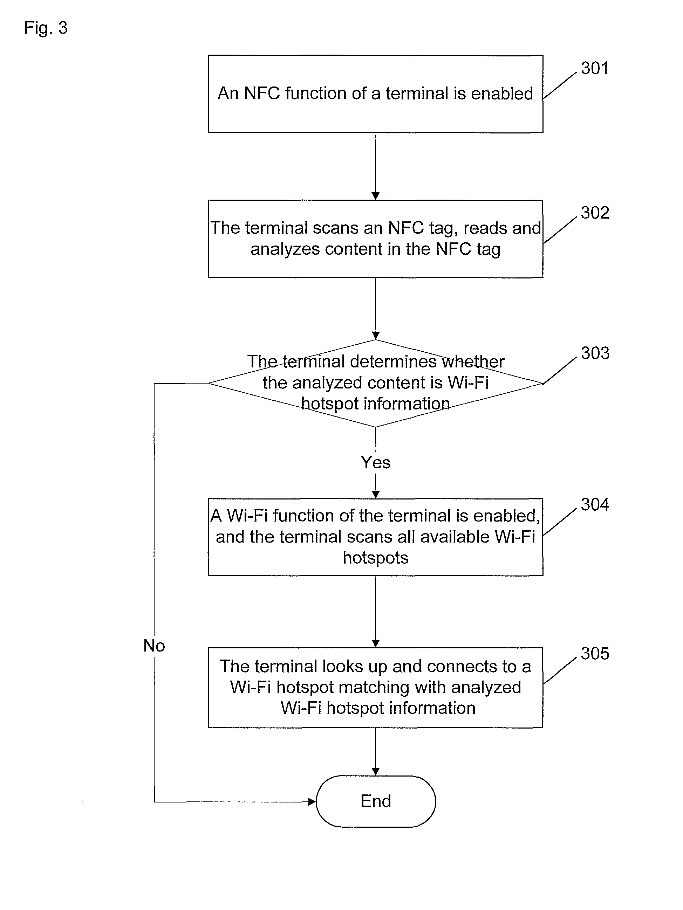

Operations implemented by a Wi-Fi hotspot user terminal will be described below, as shown in Fig. 3, the steps are as follows.

Step 301: An NFC function of a terminal is enabled;
specifically, a Wi-Fi hotspot user enables the NFC function of the terminal which is configured with an NFC function, and the NFC function is implemented by a NFC module arranged in the terminal.

Step 302, the terminal scans an NFC tag, reads and analyzes content in the NFC tag;
here if the NFC tag is not scanned by the terminal, end the current process. Wi-Fi hotspot information analyzed by the terminal includes related information such as SSID, security, password and the like.

Step 303, the terminal determines whether analyzed content is Wi-Fi hotspot information, if Yes, proceed to step 304; otherwise, end the current process;
here the terminal determines whether the analyzed content is an NDEF record of a URI type, and it is considered herein that an NDEF record of a URI type is namely Wi-Fi hotspot information.

Step 304, a Wi-Fi function of the terminal is enabled, and the terminal scans all available Wi-Fi hotspots;
this step belongs to the prior art, and detailed description thereof will be omitted.

Step 305, the terminal looks up and connects to a Wi-Fi hotspot matching with analyzed Wi-Fi hotspot information;
specifically, the terminal looks up and connects to a Wi-Fi hotspot matching with the analyzed Wi-Fi hotspot information acquired in step 302 such as SSID, security and password from scanned Wi-Fi hotspots. Certainly, if a Wi-Fi hotspot matching with the analyzed Wi-Fi hotspot information is not found, end the current process.

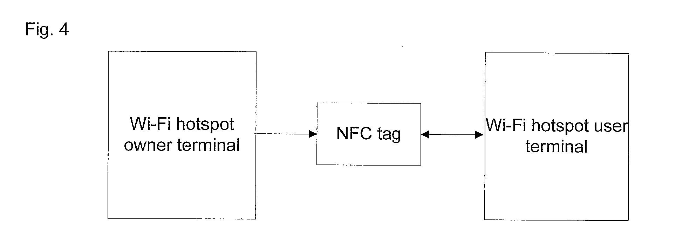

The present disclosure further provides a system for implementing a Wi-Fi connection through NFC. As shown in Fig. 4, the system includes an NFC tag, a Wi-Fi hotspot owner terminal and a Wi-Fi hotspot user terminal, wherein
the Wi-Fi hotspot owner terminal is configured to scan a Wi-Fi hotspot, edit information of the scanned Wi-Fi hotspot and write Wi-Fi hotspot information into the NFC tag;
the NFC tag is configured to store the Wi-Fi hotspot information; and
the Wi-Fi hotspot user terminal is configured to read and analyze the Wi-Fi hotspot information in the NFC tag, scan all available Wi-Fi hotspots, and find and connect to a Wi-Fi hotspot matching with analyzed Wi-Fi hotspot information.

The Wi-Fi hotspot owner terminal is further configured to, before the Wi-Fi hotspot is scanned, enable a NFC function and a Wi-Fi function of the terminal.

The Wi-Fi hotspot user terminal is further configured to, before the Wi-Fi hotspot information in the NFC tag is read, enable a NFC function of the terminal and scan the NFC tag.

The present disclosure provides a terminal configured to scan a Wi-Fi hotspot, edit information of a scanned Wi-Fi hotspot and write Wi-Fi hotspot information into an NFC tag.

The terminal is further configured to, before the Wi-Fi hotspot is scanned, enable a NFC function and a Wi-Fi function of the terminal.

The present disclosure further provides a terminal configured to read and analyze Wi-Fi hotspot information in an NFC tag, scan all available Wi-Fi hotspots, and find and connect to a Wi-Fi hotspot matching with analyzed Wi-Fi hotspot information.

The terminal is further configured to, before the Wi-Fi hotspot information in the NFC tag is read, enable a NFC function of the terminal and scan the NFC tag.

The present disclosure further provides an NFC tag configured to store Wi-Fi hotspot information.

What described are merely preferable embodiments of the present disclosure, and are not intended to limit the present disclosure.

## Claims

1. A method for implementing a Wi-Fi connection through Near Field Communication (NFC), comprising:
scanning, by a Wi-Fi hotspot owner terminal, a Wi-Fi hotspot, editing information of the scanned Wi-Fi hotspot and writing Wi-Fi hotspot information into an NFC tag;
reading and analyzing, by a Wi-Fi hotspot user terminal, the Wi-Fi hotspot information in the NFC tag, scanning all available Wi-Fi hotspots, and finding and connecting to a Wi-Fi hotspot matching with the analyzed Wi-Fi hotspot information.

2. The method according to claim 1, further comprising, before the Wi-Fi hotspot is scanned by the Wi-Fi hotspot owner terminal, enabling a NFC function and a Wi-Fi function of the terminal.

3. The method according to claim 1 or 2, further comprising, when the information of the scanned Wi-Fi hotspot is edited,
expressing the Wi-Fi hotspot information in a format of wifi://Service Set Identifier (SSID)/security/password, and packing it into an NFC Data Exchange Format (NDEF) record of a Uniform Resource Identifier (URI) type.

4. The method according to claim 1, further comprising, before the Wi-Fi hotspot information in the NFC tag is read by the Wi-Fi hotspot user terminal, enabling a NFC function of the terminal and scanning the NFC tag.

5. The method according to claim 3, wherein the analyzed Wi-Fi hotspot information comprises SSID, security and password.

6. A system for implementing a Wi-Fi connection through Near Field Communication (NFC), comprising an NFC tag, a Wi-Fi hotspot owner terminal and a Wi-Fi hotspot user terminal, wherein
the Wi-Fi hotspot owner terminal is configured to scan a Wi-Fi hotspot, edit information of the scanned Wi-Fi hotspot and write Wi-Fi hotspot information into the NFC tag;
the NFC tag is configured to store the Wi-Fi hotspot information; and
the Wi-Fi hotspot user terminal is configured to read and analyze the Wi-Fi hotspot information in the NFC tag, scan all available Wi-Fi hotspots, and find and connect to a Wi-Fi hotspot matching with the analyzed Wi-Fi hotspot information.

7. A terminal configured to scan a Wi-Fi hotspot, edit information of the scanned Wi-Fi hotspot and write Wi-Fi hotspot information into an NFC tag.

8. A terminal configured to read and analyze Wi-Fi hotspot information in an NFC tag, scan all available Wi-Fi hotspots, and find and connect to a Wi-Fi hotspot matching with the analyzed Wi-Fi hotspot information.

9. An NFC tag configured to store Wi-Fi hotspot information.
